# EUROPEAN PATENT SPECIFICATION

(11) **EP 0 422 009 B1**
(45) Date of publication and mention of the grant of the patent: **12.01.1994**
(21) Application number: 89904599.1
(22) Date of filing: 12.04.1989
(51) Int. Cl.: H01G 4/32, H01G 4/40, H01F 31/00

(54) **IMPROVED CAPACITOR WITH CONTROLLED IMPEDANCE**
KONDENSATOR MIT KONTROLLIERTER IMPEDANZ
CONDENSATEUR AMELIORE A IMPEDANCE REGULEE

(30) Priority: 18.04.1988 IT 8336588
(43) Date of publication of application: 17.04.1991
(73) Proprietor: DUCATI ENERGIA S.p.A., 40132 Bologna (IT)
(72) Inventor: BIONDI, Astorre, I-40132 Bologna (IT); TURA, Dante, I-40132 Bologna (IT)
(74) Representative: D'Agostini, Giovanni, Dr.
(86) International application number: IT8900024
(87) International publication number: WO8910622

(56) References cited:
- FR-A- 2 051 787
- GB-A- 2 026 241
- GB-A- 2 137 427
- US-A- 3 141 145
- MACHINE DESIGN, vol. 53, no. 8, April 1981, Cleveland, Ohio, US: "Compact capacitor heals itself", page 78

## Description

The object of this invention is a capacitor with controlled impedance (inductive capacitor).
The invention founds particular even if not exclusive application into systems of ignition for i.c. motors.
Capacitors in a form of coils having:
- a metallic conductor sheet;
- a first dielectric insulating film, metallized from the side opposed to the adjacent to said metallic conductor sheet;
- a second dielectric insulating film, in which
- said metallization of the dielectric film, is short-circuited in the respective edge by metallization of one respective winding head leaving said conductor sheet insulated from said head metallization are well known in prior art (Eg. GB,A,2026241).
In any case this having a sole function of capacity.
In prior art capacitor with controlled impedance (inductive capacitor) are disclosed in the IT-83490A/87 and IT-83491A/87 in the name of same applicant.
These solutions foresee a new integrated sets of capacitors in which capacity and inductive effect is integrated in a single winding device.
This capacitor is conveniently used in spark generation for i.c. motors as suggested from the Italian patent application IT-83490A/87, by means of coaxial insertion inside the high voltage circuit, said integrated inductive-capacitor.
In this solution is disclosed the winding of metallic conductor sheet with an insulating dielectric film being possible even to use stratified metallized plastic film (stratification).
An object of the present invention is to embody an improved inductive-capacitor with metallized plastic film.

This and others aims will reached with the present invention as claimed solving the problems exposed by a capacitor with controlled impedance for use in ignition of internal combustion engines, consisting in a reel obtained from the winding of a stack of foils comprising:
- a metallic conductor foil;
- a first dielectric insulating foil, metallized on the side thereof opposite to the side adjacent said metallic conductor foil; and
- a second dielectric insulating foil, on the first insulating foil, characterized in that:
- said metallization of the first dielectric foil, is short circuited on one edge of the reel by a head metallisation, and
- the reel comprises three electric linkages:
- a first electric conductor linked to the said head metallisation;
- a second electric conductor linked to the inner extremity of the said metallic conductor foil at the other edge of the reel, and
- a third electric conductor linked at the outer extremity of said metallic conductor foil at said other edge of the reel.
With this solution is obtained an inductive-capacitor able to operate in integrated inductive-capacitive function particularly useful in i.c. sparking devices. Being allowed to reduce the respective encumbrance and costs of the entire device, by automatic coaxial insertion of the inductive-capacitor inside the spark high tension winding.

These and others advantages will appear from the next itemized description of preferential solutions with the enclosed drawings the particulars of execution have not to be considered limitative but by way of example only.
Figure 1 represents a schematic outlook view in axial section of the device of this invention.
Figure 2 represents a partial magnified view of the winded set of layers and of the respective linkage to the reel head metallization .
Figure 3 represents a schematic view of an example of electric schema of the device for i.c. motors ignition.

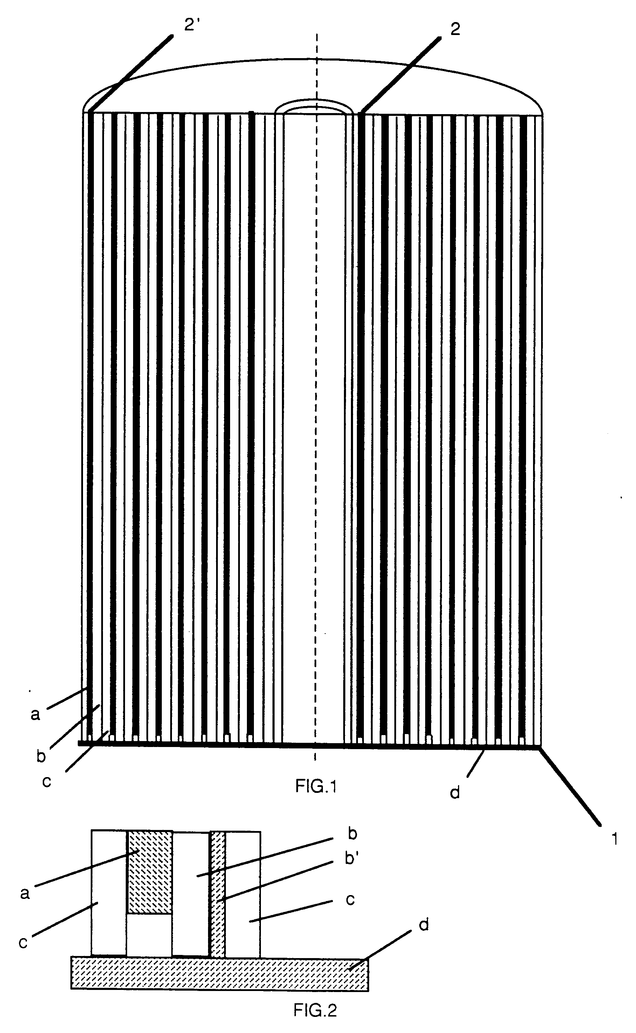

With reference to figure 1 it can be pointed out that the winding having function of inductor and capacitor as for the invention is composed of three strips alternately disposed respectively:
- a metallic conductor sheet (eg. aluminium, a);
- a first dielectric film (Eg. plastic material film of polypropylene b), metallized on the opposed surface (b');
- a second dielectric insulating film (Eg. film of polypropylene (c).

As for this invention the conductor sheet (a) is shorter than metallized dielectric film (b').
In order after winding in reels to allow reel head metallization (d) to short-circuit the respective edges of dielectric metallized film (b').
The electric terminals will be the following:
1) head conductor metallization (d);
2) electric linkage to the internal extremity of the winded metallic conductor sheet (a);
   2') electric linkage to the external extremity of said winded metallic conductor sheet (a), being destined the last two to explicate the inductive function.

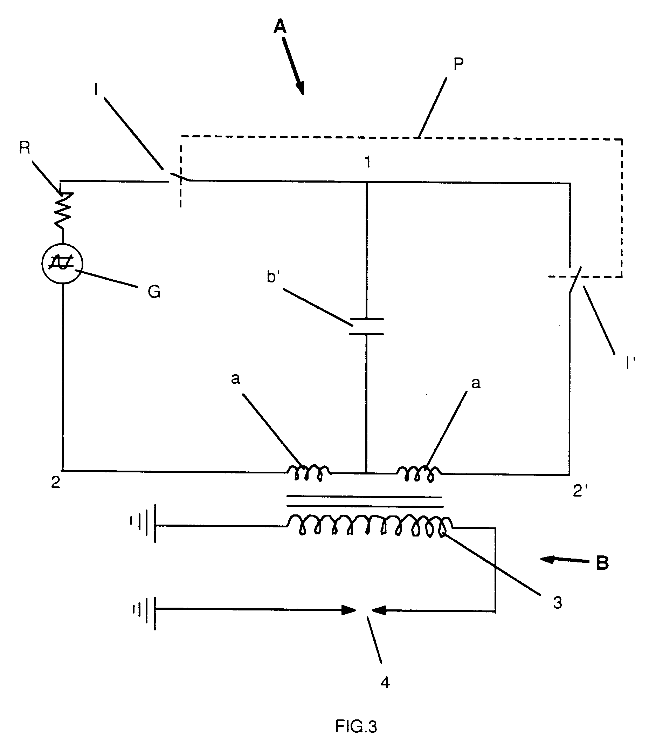

Making reference to Fig.3 it can be pointed out that setting the device as represented in Fig.1 (A) is coaxially inserted into a spark high tension induced winding (3-B), in order to deliver spark in a plugs of ignition (4).
In this way the device can function in simple and very reliable mode foreseen to link the terminals (1, 2, 2') of the device of which to the present invention with:
- a generator (G) with respective internal resistance (R),
- across two breaker means connected in serial (Eg. diodes, SCR, etc. l, l') operatively linked in order that when one (the first) closes the second open or viceversa (P);
- with the contrivance that the terminal (1) of the metallized head is linked between the respective opposed switches (l, l'), and the respective terminals (2, 2') of the metallic conductor sheet (a) linked from one side to said second switch into respective linkage in serial (l') and from the other to said generator (G).

Naturally into the ambit of this exemplificative circuit numerous variations can be made.

## Claims

1. An inductive capacitor with controlled impedance for use in ignition of internal combustion engines, consisting in a reel obtained from the winding of a stack of foils comprising:
- a metallic conductor foil (a);
- a first dielectric insulating foil (b), metallized (b') on the side thereof opposite to the side adjacent said metallic conductor foil (a); and
- a second dielectric insulating foil (c), on the first insulating foil, characterized in that:
- said metallization (b') of the first dielectric foil (b), is short circuited on one edge of the reel by a head metallisation (d), and
- the reel comprises three electric linkages:
- a first electric conductor (1) linked to the said head metallisation (d);
- a second electric conductor (2) linked to the inner extremity of the said metallic conductor foil (a) at the other edge of the reel, and
- a third electric conductor (2') linked at the outer extremity (A) of said metallic conductor foil (a) at said other edge of the reel.

2. An inductive-capacitor as claimed in claim 1, characterized in that it is associated with an induced coaxial high tension winding (B).

3. An inductive-capacitor as claimed in claim 1, characterized in that it is integrated in an i.c. motor ignition device.

4. An inductive-capacitor as claimed in claim 1, characterized in that said insulation of said metallic conductor foil (a) from the respective head metallization (d) is realzed by means of being shorter then said metallized dielectric foil (d).

## Patentansprüche

1. Induktionskondensator mit kontrollierter Impedanz zum Einsatz bei der Zündung von Verbrennungsmotoren in Form einer Spule aus aufgewickelten Folien mit
- einer Metall-Leitfolie (a),
- einer ersten dielektrischen Isolierfolie (b), die auf der Seite metallisiert (b') ist, die der der Metall-Leitfolie (a)benachharten gegenüberliegt, und
- einer zweiten dielektrischen Isolierfolie (c)auf der ersten dielektrischen Isolierfolie, gekennzeichnet dadurch, daß
- die besagte Metallisierung (b') der ersten dielektrischen Folie (b) an einer Kante der Spule durch eine Kopfmetallisierung (d) kurzgeschlossen ist, und
- die Spule drei elektrische Verbindungen umfaßt:
- einen ersten elektrischen Kondensator (1), der mit der genannten Kopfmetallisierung (d) verbunden ist;
- einen zweiten elektrischen Kondensator (2) der mit dem inneren Ende der genannten Metall-Leitfolie (a) am anderen Ende der Spule verbunden ist, sowie
- einen dritten elektrischen Kondensator (2'), der mit dem äußeren Ende (A) der genannten Metall-Leitfolie (a) am anderen Ende der Spule verbunden ist.

2. Induktionskondensator wie nach Anspruch 1, gekennzeichnet dadurch, daß er mit einer induzierten koaxialen Hochspannungsspule (B) verbunden ist.

3. Induktionskondensator wie nach Anspruch 1, gekennzeichnet dadurch, daß er in die Zündanlage eines Verbrennungsmotors integriert ist.

4. Induktionskondensator wie nach Anspruch 1, gekennzeichnet dadurch, daß die besagte Isolation der genannten Metall-Leitfolie (a) von der Kopfmetallisierung (d) dadurch verwirklicht ist. daß sie kürzer als die genannte metallisierte dielektrische Isolierfolie (b) ist.

## Revendications

1. Condensateur inducteur à impédance contrôlée pour l'allumage de moteurs à combustion interne, qui se présente comme une bobine obtenue par l'enroulement d'un groupe de feuilles comprenant:
- une feuille conductrice métallique (a);
- une première feuille diélectrique isolante, métallisée sur le côté opposé à la feuille métallique adjacente; et
- une deuxième feuille diélectrique isolante, sur la feuille isolante, caractérisée par le fait que:
- ladite métallisation (b') de la première feuille diélectrique (b), est court-circuitée sur un bord de la bobine par une métallisation de tête (d), et
- la bobine a trois liaisons électriques:
- un premier conducteur électrique (1) relié à ladite métallisation de tête (d);
- un deuxième conducteur électrique (2) relié à l'extrémité intérieure de ladite feuille conductrice métallique (a) sur l'autre bord de la bobine, et
- un troisième conducteur électrique (2') relié à l'extrémité extérieure (A) de ladite feuille conductrice métallique (a) sur ledit autre bord de la bobine.

2. Condensateur inducteur selon la revendication 1, caractérisé par le fait qu'il est associé à un enroulement induit coaxial à haute tension (B).

3. Condensateur inducteur selon la revendication 1, caractérisé par le fait qu'il est intégré dans un dispositif d'allumage d'un moteur à combustion interne.

4. Condensateur inducteur selon la revendication 1, caractérisé par le fait que ledit isolement de ladite feuille conductrice métallique (a) de la respective métallisation de tête (d) est plus court que ladite feuille diélectrique métallisée.
